# EUROPÄISCHE PATENTSCHRIFT

(11) **EP 1 053 774 B1**
(45) Veröffentlichungstag und Bekanntmachung des Hinweises auf die Patenterteilung: **03.11.2004**
(21) Anmeldenummer: 00109311.1
(22) Anmeldetag: 29.04.2000
(51) Int. Cl.: B01D 19/04, B01B 1/04, C11D 3/00

(54) **Verwendung wasserunlöslicher Polyoxyarylen-Polysiloxan-Blockmischcopolymerisate zur Entschäumung wässriger Medien**
Use of water-insoluble polyoxyarylene-polysiloxane-mass copolymers for defoaming of aqueous media
Utilisation de polyoxyarylene-polysiloxane-copolymères en masse insolubles dans l'eau pour le démoussage des milieux aqueux

(30) Priorität: 14.05.1999 DE 19922351
(43) Veröffentlichungstag der Anmeldung: 22.11.2000
(73) Patentinhaber: Goldschmidt AG, 45127 Essen (DE)
(72) Erfinder: Ebbrecht, Thomas, Dr., 44892 Bochum (DE); Josten, Wolfgang, Dr., 53639 Königswinter (DE); Keup, Michael, Dr., 45130 Essen (DE); Silber, Stefan, Dr., 47804 Krefeld (DE); Sucker, Roland, 59368 Werne (DE)

(56) Entgegenhaltungen:
- US-A- 3 763 021
- US-A- 5 733 971
- US-A- 5 861 368

## Beschreibung

Die Erfindung betrifft die Verwendung wasserunlöslicher Polyoxyarylen-Polysiloxan-Blockmischcopolymerisate zur Entschäumung wäßriger Medien.

In vielen technischen Prozessen werden in wäßrigen Formulierungen grenzflächenaktive Substanzen eingesetzt, um zum Beispiel wasserunlösliche Stoffe zu emulgieren oder die Grenzflächenspannung zu verringern und so ein besseres Benetzungsverhalten zu erzielen. Als unerwünschte Begleiterscheinung bewirken diese grenzflächenaktiven Substanzen aber, daß bei Herstellung und Verarbeitung solcher wasserbasierenden Formulierungen eingebrachte Luft als Schaum stabilisiert wird. Beispiele für Prozesse, in denen solche Probleme auftreten, sind unter anderem Papierfertigung, Abwasseraufbereitung, Emulsionspolymerisation und die Fertigung und Applikation von wasserverdünnbaren Beschichtungssystemen.

Solcher Schaum, der bei Rühr- oder Dispergiervorgängen während Fertigung oder Abfüllung entsteht, verlängert Produktionszeiten und vermindert das Effektivvolumen der Produktionsanlagen. Bei der Applikation von Lacken stört Schaum, da dieser zu unerwünschten Oberflächendefekten führt. Daher ist der Einsatz von Antischaummitteln oder Entschäumern in nahezu allen wasserbasierenden Systemen weit verbreitet und oft unerläßlich.

In der Vergangenheit ist eine Vielzahl an Formulierungen beschrieben worden, die den Einsatz von zum Beispiel Silikonölen, organomodifizierten Siloxanen, hydrophoben Polyoxyalkylenen, Mineralölen, nativen Ölen und anderen hydrophoben Flüssigkeiten als entschäumende Substanzen vornehen. Häufig werden auch Kombinationen der oben genannten Substanzen mit hydrophoben Feststoffen, wie zum Beispiel pyrogenen Kieselsäuren, Metallstearaten oder Fettsäureamiden eingesetzt, die vielfach den schaumhemmenden oder entschäumenden Effekt verstärken.

Nach derzeitigem Stand des Wissens ist für die entschäumende Wirkung entscheidend, daß ein Entschäumer in die Schaumlamellen hineinpenetrieren kann und diese damit schwächt bis sie zerplatzen. Um dies zu erreichen, ist eine kontrollierte Inkompatibilität (Hydrophobie) mit der zu entschäumenden wäßrigen Phase notwendig. Denn wenn ein Entschäumer zu kompatibel (hydrophil) ist, wird er nicht sehr wirksam sein können, da er nicht bevorzugt in die Schaumlamelle eindringt. Bei zu großer Inkompatibilität ist die Entschäumung im Regelfall zwar sehr gut, aber nicht selten treten dann als unerwünschte Nebeneffekte Oberflächenstörungen, Beeinträchtigungen im Benetzungsverhalten und Separationserscheinungen auf.

Somit ist die Suche nach einem geeigneten Entschäumer stets eine Suche nach der richtigen Inkompatibilitäts/Kompatibilitätsbalance für das zu entschäumende System, mit dem Ziel, daß das angestrebte Hydrophobie/Hydrophiliegleichgewicht möglichst optimal erreicht wird.

Um dieses Gleichgewicht besonders variabel einstellen zu können, haben sich in der Vergangenheit Polyoxyalkylen-Polysiloxan-Blockmischcopolymerisate als geeignet herausgestellt, wie dies unter anderem in US-A-3 763 021 beschrieben ist.

Man macht sich bei Verwendung der Polyoxyalkylen-Polysiloxan-Blockmischcopolymerisate zunutze, daß die Polysiloxanblöcke gezielt mit Polyoxyalkyleneinheiten modifiziert werden können, die durch ihre Zusammensetzung aus hydrophilen und hydrophoben Polyoxyalkyleneinheiten im Zusammenspiel mit dem Polysiloxanblock an das oben erwähnte gewünschte Hydrophobie/Hydrophiliegleichgewicht angepaßt werden können.

Dem Stand der Technik, als ein Beispiel sei hier DE-C-1 012 602 genannt, entsprechen Polyoxyalkylen-Polysiloxan-Blockmischcopolymerisate, in denen der Polyoxyalkylenblock als (CₙH₂ₙO)ₓ definiert ist. Der Index n ist dabei eine ganze Zahl von 2 bis 4, wobei wesentlich ist, daß diese Polyoxyalkylenblöcke als gemeinsames Strukturelement stets -CH₂-CHR-O-Gruppen enthalten, wobei R einem Wasserstoffatom, einer Methylgruppe oder einer Ethylgruppe entsprechen kann. Solche Polyoxyalkylenblöcke werden durch ionische Polymerisation von Oxiranderivaten, wie Ethylenoxid, Propylenoxid und Butylenoxid hergestellt. Darüber hinaus können auch noch Epoxide längerkettiger Olefine eingesetzt werden.

Typischerweise werden aber in den dem Stand der Technik entsprechenden Polyoxyalkylen-Polysiloxan-Blockmischcopolymerisaten Polyoxyethylene und Polyoxypropylene eingesetzt.

Durch Variation der Oxyalkylenbausteine, insbesondere durch Veränderungen ihres Mengenverhältnisses zueinander und ihrer Abfolge im Polymer (statistisch und/oder blockweise), sind eine große Zahl an Polyoxyalkylen-Polysiloxan-Blockmischcopolymerisaten erhältlich.

Aufgrund der Beschränkung auf diese oben beschriebenen Grundbausteine ist es aber in vielen Fällen bis heute nicht gelungen, die für bestimmte Entschäumer notwendige optimale Inkompatibilitäts/Kompatibilitätsbalance zu finden.

Der vorliegenden Erfindung liegt somit die Aufgabe zugrunde, für die Entschäumung wäßriger Medien besonders geeignete Polyoxyalkylen-Polysiloxan-Blockmischcopolymerisate bereitzustellen, die es ermöglichen, die oben beschriebene gewünschte Inkompatibilitäts/Kompatibilitätsbalance, besser als bislang machbar, gezielt einzustellen.

Diese Aufgabe wird überraschenderweise durch die Verwendung wasserunlöslicher Polyoxyarylen-Polysiloxan-Blockmischcopolymerisate zur Entschäumung wäßriger Medien der allgemeinen durchschnittlichen Formel I gelöst: 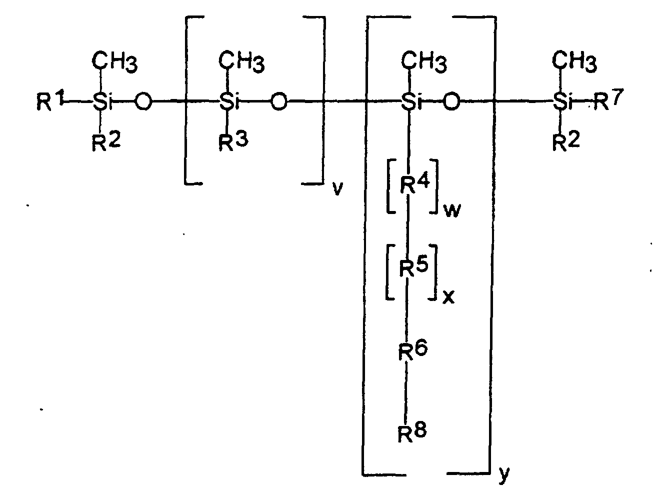 wobei
R¹ und/oder R⁷ gleich R² oder -[R⁴]_{w}-[R⁵]ₓ-[R⁶]-R⁸ sind,
R² und R³ für gleiche oder verschiedene Alkylreste mit 1 bis 24 Kohlenstoffatomen oder gegebenenfalls substituierte Phenylreste mit bis zu 24 Kohlenstoffatomen stehen, R⁴ - ein zweiwertiger Rest der Formel -O-, -NH-, -NR²-, -Soder der Formel -[O-Si(CH₃)₂]ᵤ- ist, wobei
u = 2 bis 200 ist,
R⁵ für gleiche oder verschiedene Alkylenreste mit 1 bis 24 Kohlenstoffatomen, oder -CₙH_{2n-f}R²_{f}- O- CₘH_{2m-g}R²_{g}- steht, wobei
f = 0 bis 12,
g = 0 bis 12,
n = 1 bis 18,
m = 1 bis 18 sind,
R⁶ für gleiche oder verschiedene Reste der allgemeinen Formel -O-(C₂H₄₋ₐR⁹ₐO)_{b}(C₂H₄₋ₐR¹⁰ₐO)_{c}- steht, wobei
R⁹ für gleiche oder verschiedene Alkylreste mit 1 bis 4 Kohlenstoffatomen steht und
R¹⁰ einen Rest der allgemeinen Formel II 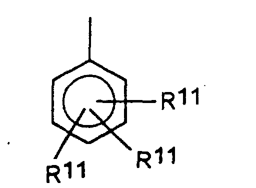 bedeutet,
wobei jedoch unter Berücksichtigung aller Reste R⁶ ein Gehalt von 40 Gew.-% an C₂H₄O-Gruppen in der Summe aller Reste R⁶ nicht überschritten wird und
R¹¹ gleich oder verschieden sein kann und ein Wasserstoffrest, ein Kohlenwasserstoffrest mit 1 bis 12 Kohlenstoffatomen oder ein Halogenatom ist,
a = 0 bis 3, wobei jedoch R¹⁰ vorhanden rein muss,
b = 0 bis 100,
c = 1 bis 100 sind,
die Summe (b + c) = 3 bis 200 ist
und die Reihenfolge der einzelnen Polyoxyalkylen- bzw. Polyoxyarylensegmente - (C₂H₄₋ₐR⁹ₐO)_{b}- und - (C₂H₄₋ₐR¹⁰ₐO)_{c}- beliebig sein kann und insbesondere Blockcopolymere, wie statistische Polymere sowie deren Kombinationen umfaßt,
R⁸ ein Wasserstoffrest, ein gegebenenfalls substituierter Alkylrest mit 1 bis 6 Kohlenstoffatomen oder ein Acylrest ist,
v = 3 bis 200,
w = 0 oder 1,
x = 0 oder 1,
y = 0 bis 200 sind
und, wenn y = 0 ist, R¹ und/oder R⁷ gleich - [R⁴]_{w}-[R⁵]ₓ-[R⁶]-R⁶ ist.

Wie aus oben gegebener Beschreibung hervorgeht, können die im Rahmen dieser Erfindung beschriebenen Polyoxyarylen-Polysiloxan-Blockmischcopolymerisate zusätzlich zu den Polyoxyaryleneinheiten auch noch Polyoxyalkyleneinheiten enthalten.

In vielen Fällen haben sich Polyoxyarylen-Polysiloxan-Blockmischcopolymerisate als gut geeignet erwiesen, die durch Kombinationen von zwei Polyoxyaryleneinheiten mit einem oder mehreren Polysiloxancopolymerisaten erhalten werden. Dabei kann die Unterscheidung im Falle der Polyoxyarylencopolymeren sowohl eine Unterscheidung in Bezug auf den relativen Anteil der für die Herstellung dieses Copolymeren verwendeten Bausteine sein, als auch im Molekulargewicht der ganzen Polyoxyaryleneinheit, als auch in ihrer Funktionalität begründet liegen.

Verschiedene Polysiloxancopolymere sind unterscheidbar sowohl nach ihrer Molmasse als auch nach ihrem Verzweigungsgrad oder der Anzahl beziehungsweise relativen Stellung der verwendeten reaktiven Gruppen, die für eine Verknüpfung zur Verfügung stehen.

Die erfindungsgemäß verwendeten Verbindungen wirken dabei ausdrücklich nicht in dem Sinne, daß sie eine besonders gute Kompatibilisierung zwischen unterschiedlich polaren Bestandteilen einer Mischung bewirken. Es ist vielmehr so, daß sie selbst lediglich gerade so kompatibel sind, daß sie keine unerwünschten Nebeneffekte wie Oberflächenstörungen, Beeinträchtigungen im Benetzungsverhalten und Separationserscheinungen hervorrufen, ohne dabei jedoch für die Kompatibilisierung anderer Inhaltsstoffe zu sorgen.

Im Vergleich zum Stand der Technik entscheidend ist dabei die Tatsache, daß die erfindungsgemäß verwendeten Verbindungen Arylreste entlang der -CH₂-CHR-O-Kette enthalten (zum Beispiel R = Phenyl), die auch die, für eine gute Entschäumung ohne unerwünschte Nebeneffekte wesentliche, Inkompatibilitäts/Kompatibilitätsbalance besonders positiv beeinflussen.

Solche Polyoxyarylen-Polysiloxan-Blockmischcopolymerisate können gemäß üblicher Methoden, wie sie dem Stand der Technik entsprechen, hergestellt werden. Wie dem Fachmann geläufig ist, zählen dazu insbesondere die Hydrosilylierungsreaktion von zusätzlich olefinisch ungesättigten Polyoxyarylen-Polysiloxan-Blockmischcopolymerisaten mit Wasserstoffpolysiloxanen oder die nucleophile Substitution von Polyoxyarylen-Polysiloxan-Blockmischcopolymerisaten mit nucleophilen Gruppen an Polysiloxanen, die zumindest ein mit einer elektronegativen Gruppe substituiertes Siliciumatom enthalten. Beschrieben sind derartige Verfahren und die Herstellung geeigneter Polysiloxane beispielsweise in W. Noll "Chemie und Technologie der Silicone", Verlag Chemie, Weinheim, 1968.

Die dazu benötigten Polyoxyarylen-Polysiloxan-Blockmischcopolymerisate können gemäß dem Stand der Technik durch ionische Polymerisation entsprechend substituierter Oxiranderivate gewonnen werden.

Die erfindungsgemäß verwendeten Polyoxyarylen-Polysiloxan-Blockmischcopolymerisate erhalten ihre einzigartigen Eigenschaften aufgrund der besonderen sterischen Bedürfnisse der Polyoxyarylene und deren im Vergleich zu Polyoxyalkylenen deutlich verschiedenem Vermögen, Wechselwirkungen untereinander und mit anderen Partnern einzugehen.

Für die vorliegende Erfindung ist wesentlich, daß die verwendeten Polyoxyarylen-Polysiloxan-Blockmischcopolymerisate bei üblicher Verarbeitungstemperatur der zu entschäumenden Medien nicht wasserlöslich sind. Dies bedeutet, daß eine 1:1 Mischung (Gew.-%) mit Wasser zu einem nicht homogenen Gemisch der beiden Phasen führt und kein Lösungsvorgang der verwendeten Polyoxyarylen-Polysiloxan-Blockmischcopolymerisate eintritt. Allerdings können herstellungsbedingt, wie unten ausgeführt, geringe Anteile an freien Polyoxyarylenen beziehungsweise Polyoxyalkylenen in den Polyoxyarylen-Polysiloxan-Blockmischcopolymerisaten enthalten sein. Da deren Herstellung im wesentlichen statistischen Gesetzen gehorcht, können somit auch besonders oxyethylenreiche Polyoxyarylene beziehungsweise Polyoxyalkylene vorkommen, die wiederum in Wasser löslich sein können. Diese Anteile sind jedoch sehr gering und betragen in den verwendeten Polyoxyarylen-Polysiloxan-Blockmischcopolymerisaten immer weniger als 10 Gew.-%.

Zur Verdeutlichung der beanspruchten Verbindungen werden beispielhaft die folgenden Polysiloxane 1 bis 3 mit den Polyoxyalkylenen bzw. -arylenen 1 bis 6 umgesetzt:

| | |
|---|---|
| **Polysiloxan 1** | (CH₃)₃SiO-[(CH₃)₂SiO-]₂₀[(CH₃)₂HSiO-]₅Si(CH₃)₃ |
| **Polysiloxan 2** | (CH₃)₂HSiO-[(CH₃)₂SiO-]₃₀[(CH₃)₂HSiO-]₄SiH(CH₃)₂ |
| **Polysiloxan 3** | (CH₃)₂ClSiO-[(CH₃)₂SiO-]₁₃SiCl(CH₃)₂ |
| **Polyoxyalkylen- bzw. -arylen 1** | H₂C=CH-CH₂O-(C₂H₄O-)₆(CH₂CH(CH₃)O-)₁₈H |
| **Polyoxyalkylen- bzw. -arylen 2** | H₂C=CH-CH₂O-(C₂H₄O-)₁₈(CH₂CH(C₆H₅)O-)₃H |
| **Polyoxyalkylen- bzw. -arylen 3** | H₂C=CH-CH₂O-(C₂H₄O-)₆(CH₂CH(C₆H₅)O-)₁₀H |
| **Polyoxyalkylen- bzw. -arylen 4** | H₃C-CH₂-CH₂-CH₂O-(C₂H₄O-)₆(CH₂CH(CH₃)O-)₁₈H |
| **Polyoxyalkylen- bzw. -arylen 5** | H₃C-CH₂-CH₂-CH₂O-(C₂H₄O-)₁₈(CH₂CH(C₆H₅)O-)₃H |
| **Polyoxyalkylen- bzw. -arylen 6** | H₃C-CH₂-CH₂-CH₂O-(C₂H₄O-)₆(CH₂CH(C₆H₅)O-)₁₀H |

Dem Fachmann ist geläufig, daß die Verbindungen in Form von Mischungen ihrer Homologen anfallen und die angegebenen Indizes Durchschnittswerte darstellen.

Entsprechend der nachstehenden Tabelle werden folgende Polyoxyalkylen-Polysiloxan- beziehungsweise Polyoxyarylen-Polysiloxan-Blockmischcopolymerisate erhalten.

| **Beispiel** | **Siloxan** | **Polyoxyalkylen bzw. -arylen** | | **erfindungsgemäß ja/nein** |
|---|---|---|---|---|
| | | **(val%)** | **(val%)** | |
| **1** | 1 | 1 (100) | - | nein |
| **2** | 1 | 2 (100) | - | nein |
| **3** | 1 | 3 (100) | - | ja |
| **4** | 2 | 1 (100) | - | nein |
| **5** | 2 | 2 (100) | - | nein |
| **6** | 2 | 3 (100) | - | ja |
| **7** | 3 | 4 (100) | - | nein |
| **8** | 3 | 5 (100) | - | nein |
| **9** | 3 | 6 (100) | - | ja |
| **10** | 3 | 4 (40) | 6 (60) | ja |

Die Herstellung der Beispiele 1 bis 6 erfolgte gemäß literaturüblicher Verfahren wie zum Beispiel in DE-B-11 65 028 beschrieben, die Herstellung der Beispiele 7 bis 10 erfolgte gemäß literaturüblicher Verfahren wie zum Beispiel in US-C-2 846 458 beschrieben.

Dem Fachmann ist geläufig, daß bei dieser dem Stand der Technik entsprechenden Herstellweise noch freies Polyoxyalkylen beziehungsweise Polyoxyarylen in den Polyoxyalkylen-Polysiloxan-Blockmischcopolymerisaten enthalten sein kann. Im Regelfall stört dieses nicht und muß für die weitere Verwendung der Verbindungen nicht entfernt werden.

Für den Einsatz als Entschäumer werden die erfindungsgemäß verwendeten wasserunlöslichen Polyoxyarylen-Polysiloxan-Blockmischcopolymerisate vorteilhaft wie folgt formuliert:
a) 72 bis 85 Gew.-% der Polyoxyarylen-Polysiloxan-Blockmischcopolymerisate
b) 15 bis 28 Gew.-% eines nichtionischen Ethoxylates mit einem HLB-Wert von 8 bis 12 und
c) 0,1 bis 10 Gew.-% mit Bezug auf die Summe a) + b) einer anorganischen oder organischen festen Substanz.

Beispiele für nichtionische Ethoxylate mit einem HLB-Wert (Hydrophilic/lipophilic balance; Definition gemäß W.C. Griffin; J. Soc. Cosmet. Chem., Band 5, Seite 249, 1954) von 8-12 sind Fettsäureester polyvalenter Alkohole, deren Polyethylenglykolderivate, Polyglykolderivate von Fettsäuren und Fettalkoholen, Alkylphenolethoxylate und Blockcopolymere aus Ethylenoxid und Propylenoxid (Pluronics). Bevorzugt werden Ethoxylate von Rohstoffen erhältlich aus natürlichen Fetten, insbesondere Oleyl- und Stearylderivate.

Beispiele der anorganischen oder organischen festen Substanz sind Kieselsäuren, Aluminiumoxid, Erdalkalimetallcarbonate, Erdalkalimetallsalze langkettiger Fettsäuren, deren Amide und Harnstoffderivate. Diese können nach bekannten Methoden noch zusätzlich hydrophobiert sein.

Die oben beschriebenen formulierten Entschäumer können pur oder in Form ihrer wäßriger Emulsion verwendet werden. Emulsionen werden häufig bevorzugt eingesetzt, da diese besser zu dosieren sind. Dabei sind Entschäumeremulsionen, deren mittlerer Teilchendurchmesser zwischen 1 und 10 µm liegt, besonders bevorzugt. Solche Emulsionen enthalten dann zwischen 5 und 50 Gew.-% der erfindungsgemäß zu verwendenden Polyoxyarylen-Polysiloxan-Blockmischcopolymerisate.

Die anwendungstechnische Überprüfung erfolgt in Dispersionsfarben, denen Entschäumer üblicherweise in Mengen von 0,01 bis 0,5 Gew.-% bezogen auf die Dispersionsfarbe zugesetzt wird.

Folgende Formulierungen wurden hergestellt und geprüft:

| **Formulierung** | **Polyoxyalkylen- bzw. Polyoxyarylen-Polysiloxan-Blockcopolymerisat aus Beispiel** | **erfindungsgemäß ja/nein** |
|---|---|---|
| **1** | 1 | nein |
| **2** | 2 | nein |
| **3** | 3 | ja |
| **4** | 4 | nein |
| **5** | 5 | nein |
| **6** | 6 | ja |
| **7** | 7 | nein |
| **8** | 8 | nein |
| **9** | 9 | ja |
| **10** | 10 | ja |

Die Formulierungen 1 bis 9 setzen sich wie folgt zusammen:

| | |
|---|---|
| 75 Gew.-% | Polyoxyalkylen- bzw. Polyoxyarylen-Polysiloxan-Blockmischcopolymerisat gemäß Beispiel 1 bis 9 |
| 20 Gew.-% | Oleylethoxylat mit HLB 10 |
| 5 Gew.-% | Kieselsäure |

In folgenden Dispersionsfarben wurde geprüft:

### Dispersionsfarbe 1 (alle Angaben in Gew.-%)

| | | |
|---|---|---|
| Propylenglykol | 4,7 | |
| Collacral® AS 35 | 5,0 | BASF |
| Titandioxid | 23,1 | |
| Mergal® K7 | 0,2 | Riedel de Haen |
| Butylglykol | 2,6 | |
| Dowanol® DPM | 1,3 | Dow |
| Wasser | 6,8 | |
| Acronal® A603 | 52,3 | BASF |
| Rheolate® 278 | 4,0 | Rheox |

### Dispersionsfarbe 2 (alle Angaben in Gew.-%)

| | | |
|---|---|---|
| Wasser | 36,4 | |
| Coatex® P50 | 0,4 | Coatex |
| Calgon® N | 0,1 | BK Ladenburg |
| Mergal® K7 | 0,2 | Riedel de Haen |
| Coatex® BR100 | 2,3 | Coatex |
| Calcidar® Extra | 22,1 | Omya |
| Titandioxid | 17,5 | |
| Finntalc® M15 | 4,7 | |
| NaOH, 10 % | 0,1 | |
| Acronal® 290D | 16,2 | BASF |

Die Dispersionsfarben wurden gemäß dem Stand der Technik formuliert. Alle Rohstoffe wurden ohne weitere Reinigung eingesetzt. Zum Schluß wurden 0,06 Gew.-% Entschäumer (Formulierung 1 bis 10) zugesetzt und 1 Minute bei 1000 U/min eingerührt.

Es wurde ein sogenannter Rollentest durchgeführt, dessen Ergebnis in den nachfolgenden Tabellen abgebildet ist. Der Rollentest ermöglicht einerseits einen praxisnahen Vergleich und bietet andererseits die Möglichkeit einer vernünftigen Differenzierung unterschiedlicher Formulierungen.

Beim Rollentest werden mittels einer offenporigen Schaumrolle 40 Gramm der zu untersuchenden Dispersionsfarbe auf einer nicht saugenden Prüfkarte mit einer Gesamtfläche von 500 cm² verteilt. Die Schaumstoffrolle wird vor der Farbapplikation mit Wasser benetzt. Es muß sichergestellt werden, daß immer die gleiche zusätzliche Menge Wasser in die vorgelegte Farbe eingebracht wird und damit die Trocknungszeit des Lackes stets gleich bleibt. Die Naßfilmauflage beträgt ca. 300 g/m² Fläche. Nach 24 Stunden Trockenzeit werden die Testkarten nach folgenden Kriterien untersucht:
a) Makroschaum (Zahl der Blasen pro 100 cm²)
b) Mikroschaum (Zahl der Pinholes im Vergleich zu Fotos von Referenzkarten auf einer Skala von 1 (keine bis sehr wenige Pinholes) bis 5 (sehr viele Pinholes))
c) Benetzungsstörungen (keine, schwach, stark)

Die Tests wurden mit mit Entschäumer versetzten Dispersionsfarben wiederholt, die 6 Wochen bei 50 °C gelagert wurden.

| Ergebnisse Dispersionsfarbe 1: | | | | | | |
|---|---|---|---|---|---|---|
| **Formulierung** | **Makroschaum** | | **Mikroschaum** | | **Benetzungsstörungen** | |
| | sofort | 6 Wochen | sofort | 6 Wochen | sofort | 6 Wochen |
| ohne | 80 | 80 | 5 | 5 | keine | keine |
| 1 | 1 | 3 | 1 | 2 | keine | schwach |
| 2 | 71 | 86 | 3 | 3 | schwach | schwach |
| 3 | 0 | 1 | 1 | 1 | keine | keine |
| 4 | 2 | 6 | 1 | 2 | keine | schwach |
| 5 | 56 | 65 | 2 | 3 | stark | stark |
| 6 | 0 | 0 | 1 | 1 | keine | keine |
| 7 | 1 | 8 | 1 | 2 | schwach | schwach |
| 8 | 27 | 31 | 2 | 2 | schwach | stark |
| 9 | 0 | 0 | 1 | 1 | keine | keine |
| 10 | 0 | 0 | 0 | 1 | keine | keine |

| Ergebnisse Dispersionsfarbe 2: | | | | | | |
|---|---|---|---|---|---|---|
| **Formulierung** | **Makroschaum** | | **Mikroschaum** | | **Benetzungsstörungen** | |
| | sofort | 6 Wochen | sofort | 6 Wochen | sofort | 6 Wochen |
| ohne | 50 | 50 | 4 | 4 | keine | keine |
| 1 | 1 | 6 | 1 | 2 | keine | schwach |
| 2 | 58 | 61 | 3 | 3 | keine | schwach |
| 3 | 0 | 3 | 1 | 1 | keine | keine |
| 4 | 2 | 10 | 1 | 2 | keine | schwach |
| 5 | 39 | 45 | 2 | 3 | stark | stark |
| 6 | 0 | 1 | 1 | 1 | keine | keine |
| 7 | 3 | 9 | 2 | 2 | schwach | schwach |
| 8 | 19 | 25 | 1 | 2 | schwach | stark |
| 9 | 0 | 0 | 1 | 1 | keine | keine |
| 10 | 0 | 0 | 0 | 2 | keine | keine |

Es zeigt sich, daß die erfindungsgemäß zu verwendenden Polyoxyarylen-Polysiloxan-Blockmischcopolymerisate, die in den Formulierungen 3, 6, 9 und 10 enthalten sind, hervorragende Möglichkeiten zur Anpassung der Eigenschaften an die Erfordernisse zur Entschäumung wäßriger Medien bieten. Man kann überraschenderweise besondere Effekte erzielen, wie sie auch mit vergleichbar unlöslichen Polyoxyalkylen-Polysiloxan-Blockmischcopolymerisaten auf Basis von gegebenenfalls substituierten Oxiranderivaten nicht möglich sind.

## Patentansprüche

1. Verwendung wasserunlöslicher Polyoxyarylen-Polysiloxan-Blockmischcopolymerisate zur Entschäumung wäßriger Medien der allgemeinen durchschnittlichen Formel I 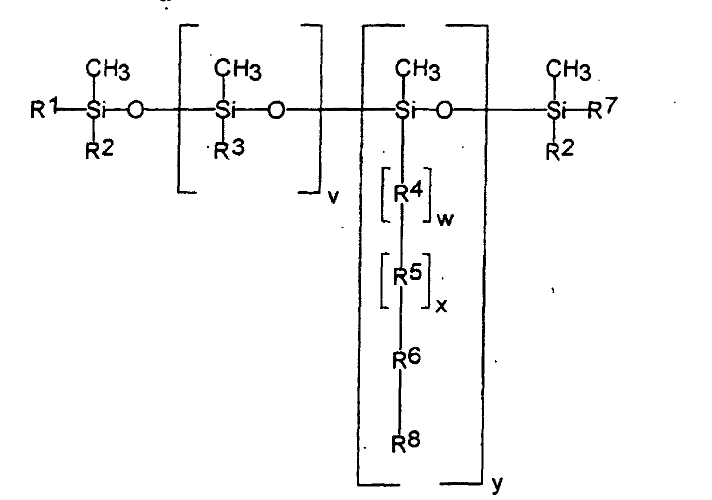 wobei
R¹ und/oder R⁷ gleich R² oder - [R⁴]_{w}-[R⁵]ₓ-[R⁶]-R⁸sind,
R² und R³ für gleiche oder verschiedene Alkylreste mit 1 bis 24 Kohlenstoffatomen oder gegebenenfalls substituierte Phenylreste mit bis zu 24 Kohlenstoffatomen stehen, R⁴ - ein zweiwertiger Rest der Formel -O-, -NH-, -NR²-, -Soder der Formel - [O-Si(CH₃)₂]ᵤ- ist, wobei
u = 2 bis 200 ist,
R⁵ für gleiche oder verschiedene Alkylenreste mit 1 bis 24 Kohlenstoffatomen oder
- CₙH_{2n-f}R²_{f}O-CₘH_{2m-g}R²_{g}- steht, wobei
f = 0 bis 12,
g = 0 bis 12,
n = 1 bis 18,
m = 1 bis 18 sind,
R⁶ für gleiche oder verschiedene Reste der allgemeinen Formel -O-(C₂H₄₋ₐR⁹ₐO)_{b}(C₂H₄₋ₐR¹⁰ₐO)_{c}- steht, wobei
R⁹ für gleiche oder verschiedene Alkylreste mit 1 bis 4 Kohlenstoffatomen steht und
R¹⁰ einen Rest der allgemeinen Formel II 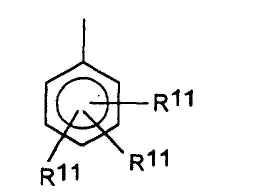 bedeutet,
wobei jedoch unter Berücksichtigung aller Reste R⁶ ein Gehalt von 40 Gew.-% an C₂H₄O-Gruppen in der Summe aller Reste R⁶ nicht überschritten wird und
R¹¹ gleich oder verschieden sein kann und ein Wasserstoffrest, ein Kohlenwasserstoffrest mit 1 bis 12 Kohlenstoffatomen oder ein Halogenatom ist,
a = 0 bis 3, wobei jedoch R¹⁰ vorhanden sein muss,
b = 0 bis 100,
c = 1 bis 100 sind,
die Summe (b + c) = 3 bis 200 ist
und die Reihenfolge der einzelnen Polyoxyalkylen- bzw. Polyoxyarylensegmente - (C₂H₄₋ₐR⁹ₐO)_{b}- und - (C₂H₄₋ₐR¹⁰ₐO)_{c}- beliebig sein kann und insbesondere Blockcopolymere, wie statistische Polymere sowie deren Kombinationen umfaßt,
R⁸ ein Wasserstoffrest, ein gegebenenfalls substituierter Alkylrest mit 1 bis 6 Kohlenstoffatomen oder ein Acylrest ist,
v = 3 bis 200,
w = 0 oder 1,
x = 0 oder 1,
y = 0 bis 200 sind
. und wenn y = 0 ist, R¹ und/oder R⁷ gleich -[R⁴]_{w}-[R⁵]ₓ-[R⁶]-R⁸ ist.

2. Verwendung wasserunlöslicher Polyoxyarylen-Polysiloxan-Blockmischcopolymerisate zur Entschäumung wäßriger Medien gemäß Anspruch 1, wobei mindestens 80 % der Gruppen R² und R³ Methylgruppen sind,
R¹ = R⁷,
R¹¹ = H ist
und die Summe v + y = 8 bis 120 ist.

3. Verwendung wasserunlöslicher Polyoxyarylen-Polysiloxan-Blockmischcopolymerisate zur Entschäumung wäßriger Medien gemäß den Ansprüchen 1 und 2, wobei
R¹ = R⁷ = -CH₃ ist,
R⁵ = -(CH₂)₃- ist,
w = 0 und
x = 1 ist.

4. Verwendung wasserunlöslicher Polyoxyarylen-Polysiloxan-Blockmischcopolymerisate zur Entschäumung wäßriger Medien gemäß den Ansprüchen 1 und 2, wobei
R¹ = R⁷ = -(CH₂)₃-R⁶-R⁸ ist,
R⁵ = -(CH₂)₃- ist,
w = 0 und
x = 1 ist.

5. Verwendung wasserunlöslicher Polyoxyarylen-Polysiloxan-Blockmischcopolymerisate zur Entschäumung wäßriger Medien gemäß den Ansprüchen 1 und 2, wobei
R¹ = R⁷= -(CH₂)₃-R⁶-R⁸ und
y = 0 ist.

6. Verwendung wasserunlöslicher Polyoxyarylen-Polysiloxan-Blockmischcopolymerisate zur Entschäumung wäßriger Medien gemäß den Ansprüchen 1 und 2, wobei
R¹ = R⁷ = -(CH₂)₃-R⁶-R⁸,
R⁴=- [O-Si(CH₃)₂]ᵤ-,
R⁸ = unverzweigter Alkylrest,
u = 2 bis 6,
w = 1,
x = 0 und
y = 2 bis 6 ist.

7. Verwendung wasserunlöslicher Polyoxyarylen-Polysiloxan-Blockmischcopolymerisate zur Entschäumung wäßriger Medien gemäß den Ansprüchen 1 und 2, wobei
R¹ = R⁷ = -(CH₂)₃-R⁶-R⁸,
R⁸ = unverzweigter Alkylrest und
y = 0 ist.

8. Verwendung wasserunlöslicher Polyoxyarylen-Polysiloxan-Blockmischcopolymerisate zur Entschäumung wäßriger Medien gemäß den Ansprüchen 1 bis 8, wobei c = 2 bis 5 ist.

9. Verwendung wasserunlöslicher Polyoxyarylen-Polysiloxan-Blockmischcopolymerisate zur Entschäumung wäßriger Medien gemäß den Ansprüchen 1 bis 8, wobei die einzelnen Polyoxyalkylen- und Polyoxyaryleneinheiten blockweise angeordnet sind.

10. Verwendung wasserunlöslicher Polyoxyarylen-Polysiloxan-Blockmischcopolymerisate zur Entschäumung wäßriger Medien gemäß den Ansprüchen 1 bis 9, wobei die (C₂H₄₋ₐR¹⁰ₐO)_{c}-Gruppen blockweise unmittelbar an R⁸ grenzend angeordnet sind.

11. Verwendung nach den Ansprüchen 1 bis 10 **dadurch gekennzeichnet, daß** dem Entschäumer Emulgatoren zugesetzt sind.

12. Verwendung nach den Ansprüchen 1 bis 11 **dadurch gekennzeichnet, daß** dem Entschäumer Festkörper zugesetzt sind.

13. Verwendung nach den Ansprüchen 1 bis 12 **dadurch gekennzeichnet, daß** die Entschäumer in Form wäßrige Emulsionen vorliegen.

14. Verwendung wasserunlöslicher Polyoxyarylen-Polysiloxan-Blockmischcopolymerisate gemäß den Ansprüchen 1 bis 13 zur Entschäumung von Kühlschmierstoffen.

15. Verwendung wasserunlöslicher Polyoxyarylen-Polysiloxan-Blockmischcopolymerisate gemäß den Ansprüchen 1 bis 13 zur Entschäumung von Polymerdispersionen.

16. Verwendung wasserunlöslicher Polyoxyarylen-Polysiloxan-Blockmischcopolymerisate gemäß den Ansprüchen 1 bis 13 zur Entschäumung von Lacken und Druckfarben.

## Claims

1. The use of water-insoluble polyoxyarylene-polysiloxane block copolymers of the general average formula I 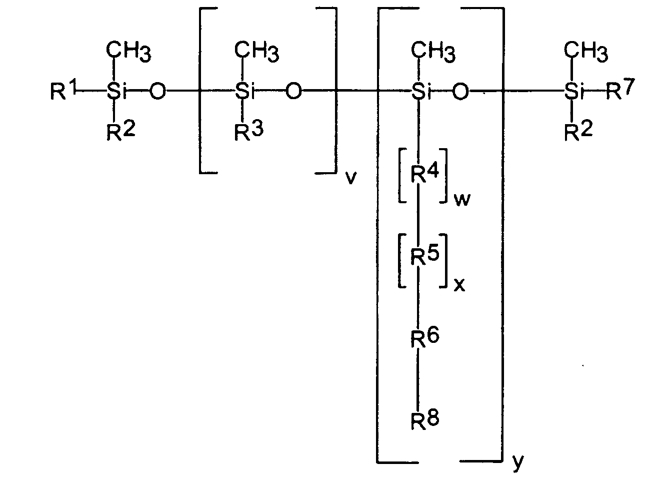 where
R¹ and/or R⁷ are R² or -[R⁴]_{w}- [R⁵]ₓ [R⁶]-R⁸,
R² and R³ are identical or different alkyl radicals having 1 to 24 carbon atoms or are unsubstituted or substituted phenyl radicals having up to 24 carbon atoms,
R⁴- is a divalent radical of the formula -O-, - NH-, -NR²-, -S- or of the formula -[O-Si(CH₃)₂]ᵤ-, where
u is from 2 to 200,
R⁵ is identical or different alkylene radicals having 1 to 24 carbon atoms, or is -CₙH_{2n-f}R²_{f}-O-CₘH_{2m-g}R²-, where
f is from 0 to 12,
g is from 0 to 12,
n is from 1 to 18,
m is from 1 to 18,
R⁶ is identical or different radicals of the general formula -O-(C₂H₄₋ₐR⁹ₐO)_{b}(C₂H₄₋ₐR¹⁰ ₐO)_{c}-, where
R⁹ is identical or different alkyl radicals having 1 to 4 carbon atoms and
R¹⁰ is a radical of the general formula II 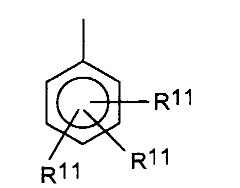 but where, taking into account all radicals R⁶, the proportion of C₂H₄O groups among the total of all radicals R⁶ does not exceed 40% by weight, and
R¹¹ can be identical or different and is a hydrogen, a hydrocarbon radical having 1 to 12 carbon atoms, or a halogen atom,
a is from 0 to 3, but where R¹⁰ must be present,
b is from 0 to 100,
c is from 1 to 100, and
the sum (b + c) is from 3 to 20.0
and the sequence of the individual polyoxyalkylene and/or polyoxyarylene segments - (C₂H₄-ₐR⁹ ₐO) _{b}- and - (C₂H₄₋ₐR¹⁰ₐO)_{c}- can be as desired and, in particular, embraces block copolymers, such as random polymers and combinations thereof,
R⁸ is a hydrogen, a substituted or unsubstituted alkyl radical having from 1 to 6 carbon atoms, or an acyl radical,
v is from 3 to 200,
w is 0 or 1,
x is 0 or 1,
y is from 0 to 200,
and, if y is 0, R¹ and/or R⁷ are/is - [R⁴]_{w}- [R⁵]ₓ-[R⁶]-R⁸
for defoaming aqueous media.

2. The use of water-insoluble polyoxyarylene-polysiloxane block copolymers for defoaming aqueous media, according to Claim 1, where at least 80% of the groups R² and R³ are methyl groups,
R¹ = R⁷,
R¹¹ is H,
and the sum v + y is from 8 to 120.

3. The use of water-insoluble polyoxyarylene-polysiloxane block copolymers for defoaming aqueous media, according to Claim 1 or 2, where
R¹ = R⁷ and is -CH₃,
R⁵ is -(CH₂)₃-,
w is 0, and
x is 1.

4. The use of water-insoluble polyoxyarylene-polysiloxane block copolymers for defoaming aqueous media, according to Claim 1 or 2, where
R¹ = R⁷ and is -(CH₂)₃-R⁶-R⁸,
R⁵ is - (CH₂)₃-,
w is 0, and
x is 1.

5. The use of water-insoluble polyoxyarylene-polysiloxane block copolymers for defoaming aqueous media, according to Claim 1 or 2, where
R¹ = R⁷ and is - (CH₂)₃-R⁶-R⁸ and
y is 0.

6. The use of water-insoluble polyoxyarylene-polysiloxane block copolymers for defoaming aqueous media, according to Claim 1 or 2, where
R¹ R⁷ and is - (CH₂)₃-R⁶-R⁸,
R⁴ is - [O-Si(CH₃)₂]ᵤ-,
R⁸ is an unbranched alkyl radical,
u is from 2 to 6,
w is 1,
x is 0, and
y is from 2 to 6.

7. The use of water-insoluble polyoxyarylene-polysiloxane block copolymers for defoaming aqueous media, according to Claim 1 or 2, where
R¹ = R⁷ and is -(CH₂)₃-R⁶-R⁸,
R⁸ is unbranched alkyl radical, and
y is 0.

8. The use of water-insoluble polyoxyarylene-polysiloxane block copolymers for defoaming aqueous media, according to any of Claims 1 to 8, where c is from 2 to 5.

9. The use of water-insoluble polyoxyarylene-polysiloxane block copolymers for defoaming aqueous media, according to any of Claims 1 to 8, where the individual polyoxyalkylene and polyoxyarylene units are arranged in blocks.

10. The use of water-insoluble polyoxyarylene-polysiloxane block copolymers for defoaming aqueous media, according to any of Claims 1 to 9, where the (C₂H₄-ₐR¹⁰ₐO)_{c} groups are arranged in blocks directly adjacent to R⁸.

11. The use according to any of Claims 1 to 10, **characterized in that** emulsifiers are added to the defoamer.

12. The use according to any of Claims 1 to 11, **characterized in that** solids are added to the defoamer.

13. The use according to any of Claims 1 to 12, **characterized in that** the defoamers are in the form of aqueous emulsions.

14. The use of water-insoluble polyoxyarylene-polysiloxane block copolymers, according to any of Claims 1 to 13, for defoaming cooling lubricants.

15. The use of water-insoluble polyoxyarylene-polysiloxane block copolymers, according to any of Claims 1 to 13, for defoaming polymer dispersions.

16. The use of water-insoluble polyoxyarylene-polysiloxane block copolymers, according to any of Claims 1 to 13, for defoaming coating materials and printing inks.

## Revendications

1. Utilisation de copolymères polyoxyarylène-polysiloxane séquencés insolubles dans l'eau pour le démoussage de milieux aqueux, de formule moyenne générale I 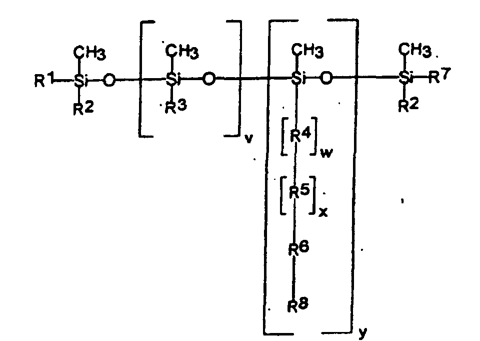 dans laquelle
R¹ et/ou R⁷ représentent R² ou -[R⁴]_{w}-[R⁵]ₓ-[R⁶]-R⁸,
R² et R³ représentent des radicaux alkyle identiques ou différents ayant de 1 à 24 atomes de carbone ou des radicaux phényle éventuellement substitués ayant jusqu'à 24 atomes de carbone,
R⁴ est un radical divalent de formule -O-, -NH-, -NR²-, -S- ou de formule -[O-Si(CH₃)₂]ᵤ-, u étant un nombre allant de 2 à 200,
R⁵ représente des radicaux alkylène identiques ou différents ayant de 1 à 24 atomes de carbone ou -CₙH_{2n-f}R²_{f}-O-CₘH_{2m-g}R²_{g}-, où
f = 0 à 12,
g = 0 à 12,
n = 1 à 18,
m = 1 à 18,
R⁶ représente des radicaux identiques ou différents de formule générale -O-(C₂H₄₋ₐR⁹ₐO)_{b}(C₂H₄₋ₐR¹⁰ₐO)_{c}-,
R⁹ représentant des radicaux alkyle identiques ou différents ayant de 1 à 4 atomes de carbone et
R¹⁰ représentant un radical de formule générale II 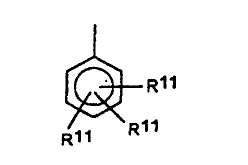 en considérant tous les radicaux R⁶ une teneur de 40% en poids en groupes C₂H₄O dans la totalité de tous les radicaux R⁶ n'étant toutefois pas excédée et
les radicaux R¹¹ pouvant être identiques ou différents et représentant un atome d'hydrogène, un radical hydrocarboné ayant de 1 à 12 atomes de carbone ou un atome d'halogène,
a = 0 à 3, mais R¹⁰ devant être présent,
b = 0 à 100,
c = 1 à 100,
la somme (b + c) = 3 à 200
et l'ordre des segments polyoxyalkylène et polyoxyarylène - (C₂H₄₋ₐR⁹ ₐO)_{b}- et -(C₂H₄₋ₐR¹⁰ ₐO)_{c}-individuels pouvant être quelconque et comprenant en particulier des copolymères séquencés, tels que des polymères statistiques ainsi que des combinaisons de ceux-ci,
R⁸ représente un atome d'hydrogène, un radical alkyle éventuellement substitué ayant de 1 à 6 atomes de carbone ou un radical acyle,
v = 3 à 200,
w = 0 ou 1,
x = 0 ou 1,
y = 0 à 200
et lorsque y = 0, R¹ et/ou R⁷ représente(nt) - [R⁴] _{w}- [R⁵]ₓ- [R⁶] -R⁸.

2. Utilisation de copolymères polyoxyarylène-polysiloxane séquencés insolubles dans l'eau pour le démoussage de milieux aqueux selon la revendication 1, dans laquelle au moins 80 % des groupes R² et R³ sont des groupes méthyle,
R³ = R⁷,
R¹¹ = H
et la somme v + y = 8 à 120.

3. Utilisation de copolymères polyoxyarylène-polysiloxane séquencés insolubles dans l'eau pour le démoussage de milieux aqueux selon les revendications 1 et 2, dans laquelle
R¹ = R⁷ = CH₃ ,
R⁵ = -(CH₂)₃-,
w = 0 et
x = 1.

4. Utilisation de copolymères polyoxyarylène-polysiloxane séquencés insolubles dans l'eau pour le démoussage de milieux aqueux selon les revendications 1 et 2, dans laquelle
R¹ = R⁷= - (CH₂)₃-R⁶-R⁸,
R⁵ = -(CH₂)₃-,
w = 0 et
x = 1.

5. Utilisation de copolymères polyoxyarylène-polysiloxane séquencés insolubles dans l'eau pour le démoussage de milieux aqueux selon les revendications 1 et 2, dans laquelle
R¹ = R⁷= -(CH₂)₃-R⁶-R⁸ et
y = 0.

6. Utilisation de copolymères polyoxyarylène-polysiloxane séquencés insolubles dans l'eau pour le démoussage de milieux aqueux selon les revendications 1 et 2, dans laquelle
R¹ = R⁷ = -(CH₂)₃-R⁶-R⁸,
R⁴= -[O-Si(CH₃)₂]ᵤ-,
R⁸ représente un radical alkyle non ramifié,
u = 2 à 6,
w = 1,
x = 0 et
y = 2 à 6.

7. Utilisation de copolymères polyoxyarylène-polysiloxane séquences insolubles dans l'eau pour le démoussage de milieux aqueux selon les revendications 1 et 2, dans laquelle
R¹ = R⁷= - (CH₂)₃-R⁶-R⁸ et
R⁸ représente un radical alkyle non ramifié et y = 0.

8. Utilisation de copolymères polyoxyarylène-polysiloxane séquencés insolubles dans l'eau pour le démoussage de milieux aqueux selon les revendications 1 à 7, dans laquelle c = 2 à 5.

9. Utilisation de copolymères polyoxyarylène-polysiloxane séquencés insolubles dans l'eau pour le démoussage de milieux aqueux selon les revendications 1 à 8, dans laquelle les motifs polyoxyalkylène et polyoxyarylène sont ordonnés séquentiellement.

10. Utilisation de copolymères polyoxyarylène-polysiloxane séquencés insolubles dans l'eau pour le démoussage de milieux aqueux selon les revendications 1 à 9, dans laquelle les groupes (C₂H₄₋ₐR¹⁰ₐO)_{c} sont disposés séquentiellement en étant directement adjacents à R⁸.

11. Utilisation selon les revendications 1 à 10, **caractérisée en ce que** des émulsifiants sont ajoutés à l'antimousse.

12. Utilisation selon les revendications 1 à 11, **caractérisée en ce que** des corps solides sont ajoutés à l'antimousse.

13. Utilisation selon les revendications 1 à 12, **caractérisée en ce que** les antimousses se trouvent sous forme d'émulsions aqueuses.

14. Utilisation de copolymères polyoxyarylène-polysiloxane séquencés insolubles dans l'eau selon les revendications 1 à 13, pour le démoussage de lubrifiants réfrigérants.

15. Utilisation de copolymères polyoxyarylène-polysiloxane séquencés insolubles dans l'eau selon les revendications 1 à 13, pour le démoussage de dispersions de polymères.

16. Utilisation de copolymères polyoxyarylène-polysiloxane séquencés insolubles dans l'eau selon les revendications 1 à 13, pour le démoussage de peintures et d'encres d'imprimerie.
